# EUROPEAN PATENT SPECIFICATION

(11) **EP 0 438 987 B1**
(45) Date of publication and mention of the grant of the patent: **02.03.1994**
(21) Application number: 90830596.4
(22) Date of filing: 18.12.1990
(51) Int. Cl.: B62D 7/15

(54) **A mechanical device for steering the rear wheels of a motor vehicle with four steerable wheels**
Mechanische Vorrichtung zur Lenkung der Hinterräder eines Fahrzeuges mit vier lenkbaren Rädern
Dispositif mécanique de direction des roues arrière d'un véhicule à quatre roues directrices

(30) Priority: 24.01.1990 IT 6705090
(43) Date of publication of application: 31.07.1991
(73) Proprietor: FIAT AUTO S.p.A., 10135 Torino (IT)
(72) Inventor: Gandiglio, Romolo, I-10020 Cambiano (Torino) (IT)
(74) Representative: Marchitelli, Mauro

(56) References cited:
- EP-A- 0 337 956
- EP-A- 0 340 179
- DE-A- 3 341 955
- GB-A- 2 180 206
- GB-A- 2 213 114

## Description

The present invention relates to a mechanical device for steering the rear wheels of a motor vehicle with four steerable wheels.

More particularly, the invention relates to a steering device of the type comprising:
- a rear steering unit including a rotatable cam opposite sides of which are engaged by two followers operatively associated with a mechanism for effecting the steering of the rear wheels, and
- transmission means for rotating the cam about its axis in dependence on the steering of the front wheels.

A steering device of the type defined above is known from European Patent Application No.EP-A-0 337 956 by the same Applicant. In this known device, the rear steering unit comprises a transverse bar which carries the followers and is connected to the rear wheels by means of tie-rods and steering joints. The movement which causes the steering of the rear wheels is transmitted by the transverse bar and thus takes place along a straight line.

In practice, a rectilinear movement has, in some cases, been found to be inadequate for steering of the rear wheels. For example, European Patent Application No. EP-A-0 340 179 by the same Applicant describes a rear suspension for motor vehicles, in which the suspension support frame is mounted for rotation relative to the vehicle body about a vertical axis contained in the longitudinal median plane of the vehicle. With a geometry of this type, the use of a steering device with a rectilinear operating movement would require the use of transmissions which would make the mechanism for transmitting the steering movement more complicated.

The object of the present invention is to provide a steering device of the type specified at the beginning of the description, which overcomes the aforesaid problem whilst retaining a structure which is simple and cheap to produce.

According to the present invention, this object is achieved by the provision of a mechanical steering device of the type defined above, characterised in that the followers are carried by a rotatable operating member to which a pair of steering tie-rods forming part of the mechanism for effecting the steering of the rear wheels is articulated.

By virtue of this concept, the steering movement takes place along a circular path centred on the axis of rotation of the operating member and the steering device can therefore be applied to a steerable rear suspension unit of the type described in the European Patent Application No. EP-A-0 340 179 cited above to rotate the entire rear suspension support frame without the need for complicated and expensive mechanisms for transmitting the operating movement.

Further characteristics and advantages of the present invention will become clear in the course of the detailed description which follows with reference to the appended drawings, provided purely by way of non-limiting example, in which:
- Figure 1 is a side view showing a steering device of a vehicle with four steerable wheels,
- Figure 2 is a plan view of the steering device of Figure 1,
- Figure 3 is a partially-sectioned plan view of the part indicated by the arrow III in Figure 2,
- Figures 4 and 5 are sections taken on the lines IV-IV and V-V of Figure 3, and
- Figure 6 is a perspective view of the rear steering unit shown in Figure 3.

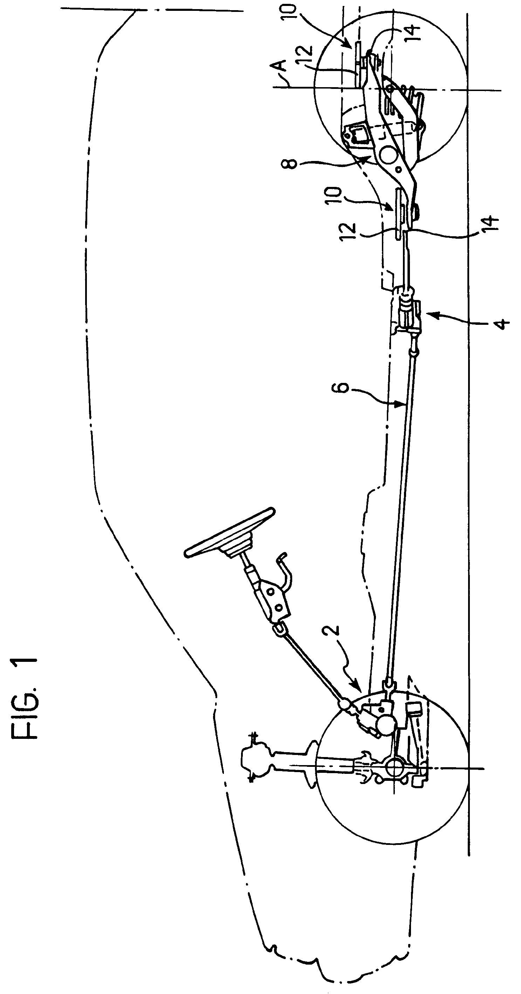

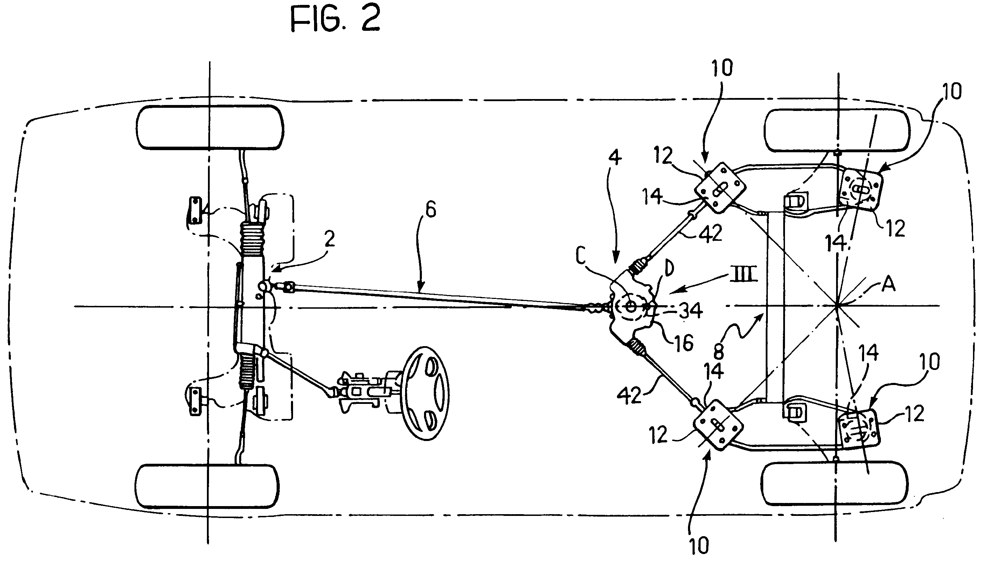

Figures 1 and 2 show a steering device for a motor vehicle with four steerable wheels, in which can be seen a conventional front steering unit 2 and a rear steering unit 4 according to the present invention. The front and rear steering units 2 and 4 are interconnected by a longitudinal transmission shaft 6.

The vehicle shown in Figures 1 and 2 has a steerable rear suspension unit of the type described and illustrated in European Patent Application No. EP-A-0 340 179. The rear suspension unit includes a support frame 8 connected to the vehicle body for rotation about a vertical axis A contained in the longitudinal median plane of the vehicle. The frame 8 is connected to the vehicle body by means of four connecting members, indicated 10. Each connecting member 10 comprises a first element 12 fixed to the vehicle body and a second element 14 fixed to the suspension support frame 8 and movable relative to the first element 10 in a direction tangential to a circle centred on the axis A.

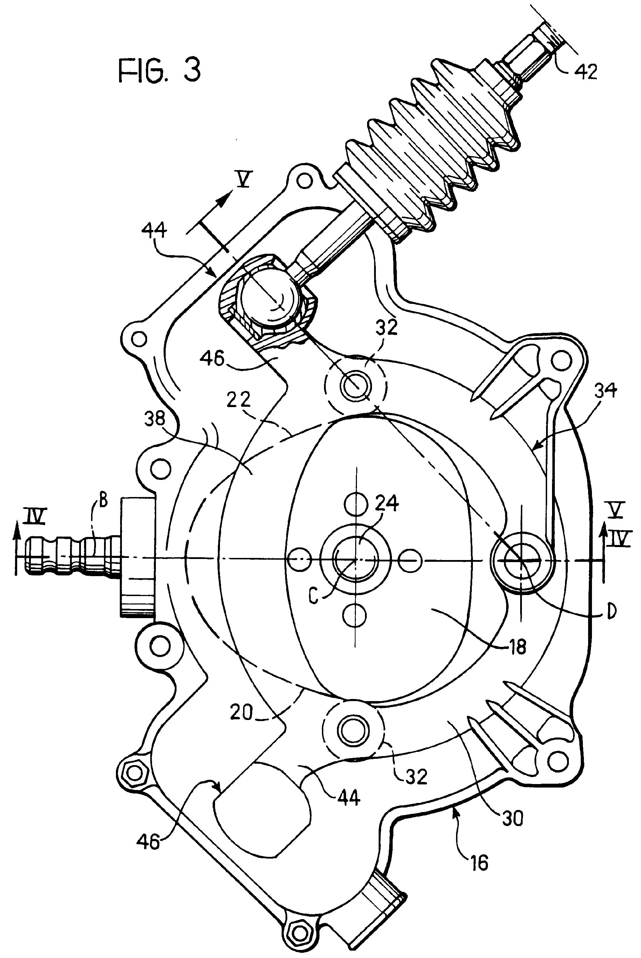

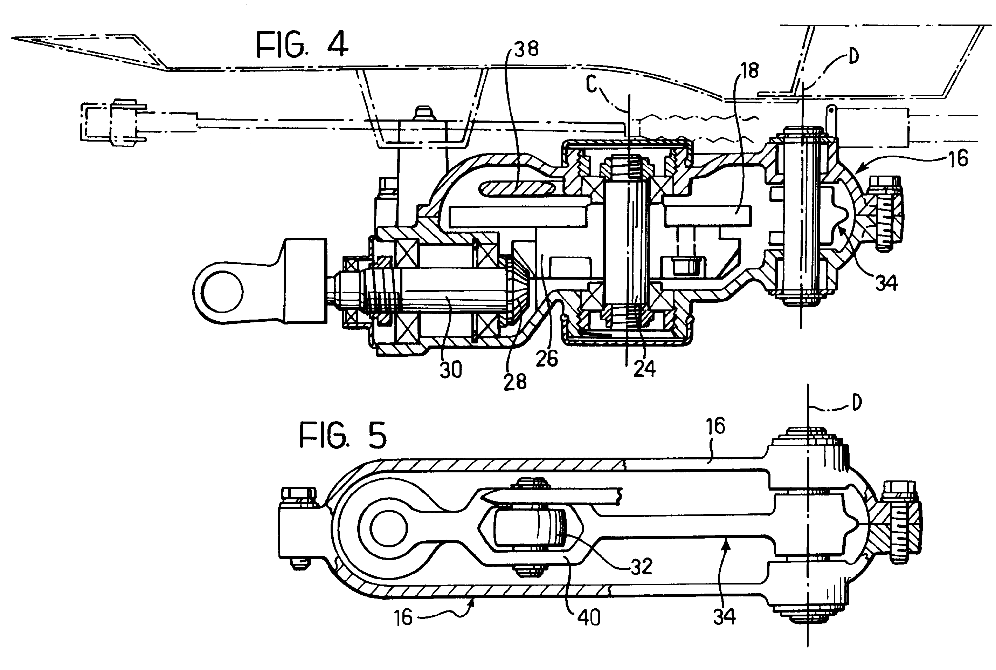

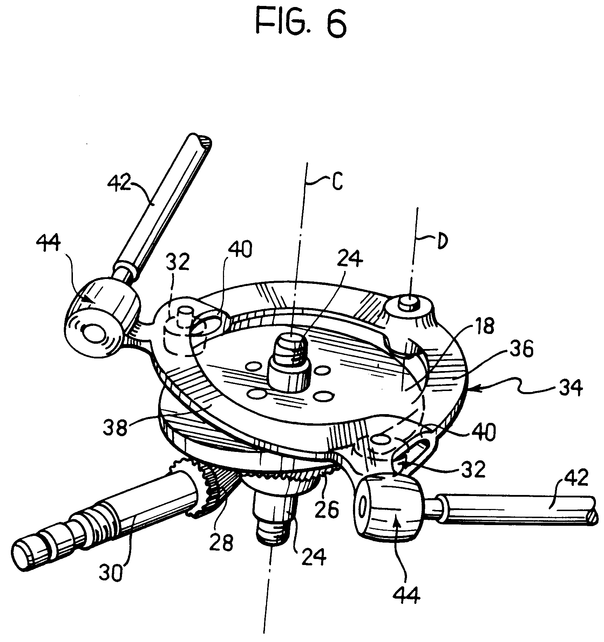

As shown in Figures 3 to 6, the rear steering unit 4 includes a casing 16 which is fixed to the vehicle body and in which a cam 18, formed by a plate whose side edge constitutes the active cam profile, is mounted rotatably. The cam 18 is symmetrical about an axis B so that its side edges define a pair of symmetrical active profiles 20 and 22 (Figure 3). The cam 18 is fixed to a pin 24 which is supported by the casing 16 for rotation about its axis C. As can be seen in Figures 4 and 6, a bevel gear 26 is fixed to the cam 18 and meshes with a bevel pinion 28 carried by a shaft 30 which is connected to the longitudinal transmission shaft 6.

Two followers, which are constituted by two rollers 32 in the embodiment illustrated in the drawings, engage the profiles 20, 22 of the cam 18 from opposite sides. An operating member 34 supports the rollers 32 for rotation about respective axis parallel to the axis C of rotation of the cam 18. The operating member 34 is mounted for rotation relative to the casing 16 about an axis D parallel to the axis C of rotation of the cam 18. As can be seen in Figures 3 and 6, the operating member 34 is formed by metal profiles with flattened cross-sections which constitute a first, generally U-shaped, stirrup-like arm 36 and a second arcuate arm 38 which connects the ends of the stirrup 36. Two forks 40 which support the rollers 32 are formed at the ends of the stirrup 36.

A pair of steering tie-rods 42 is connected to the operating member 34 and each carries at one end a ball joint 44 whose body 46 is fixed to the operating member 34. As can be seen in Figure 2, the other end of each steering tie-rod 42 is articulated to the second element of a respective connecting member 10.

In use, a rotation of the vehicle's steering wheel causes a rotation of the cam 18 in dependence on the transmission ratio between the front and rear steering units 2 and 4. The rotation of the cam 18 causes a rotation of the operating member 34 about its axis D by means of the follower rollers 32. The law governing the steering of the rear wheels of the vehicle is therefore determined by the shape of the active profile of the cam 18.

For small steering angles, the sense of the rear-wheel steering angle will be the same as that of the front-wheel steering angle. For large steering angles, which involve a rotation of the cam 18 through more than 180° from the configuration shown in Figures 3 and 6, the sense of the rear-wheel steering angle will be the opposite of that of the front-wheel steering angle.

## Claims

1. A mechanical device for steering the rear wheels of a motor vehicle with four steerable wheels, comprising:
- a rear steering unit (4) including a rotatable cam (18) opposite sides of which are engaged by two followers (32) operatively associated with a mechanism for effecting the steering of the rear wheels, and
- transmission means for rotating the cam (18) about its axis (C) in dependence on the steering of the front wheels,
characterised in that the followers (32) are carried by a rotatable operating member (34) to which a pair of steering tie-rods (42) forming part of the mechanism for operating the steering of the rear wheels is articulated.

2. A device according to Claim 1, characterised in that the cam (18) and the operating member (34) are mounted for rotation about parallel axes (C, D).

3. A device according to Claim 1, characterised in that the steering tie-rods (42) are articulated to the operating member (34) by means of respective ball joints (44).

4. A device according to Claim 1, characterised in that the cam (18) is constituted by a plate with active lateral profiles (20, 22) which define the law governing the steering of the rear wheels.

5. A device according to Claim 4, characterised in that the followers (32) comprise a pair of rollers supported by the operating member (34) for rotation about respective axes substantially parallel to the axis of rotation (C) of the cam (18).

6. A device according to Claim 1, characterised in that the transmission means comprise a longitudinal shaft (6) connected to the cam (18) by means of a bevel gear (26, 28).

7. A device according to Claim 5, characterised in that the operating member (34) comprises a first arm (36) constituted by a generally U-shaped stirrup with fork-shaped ends (40) housing the rollers (32), and a second arcuate arm (38) connecting the ends (40) of the stirrup (36).

8. A motor vehicle with four steerable wheels, including a rear-suspension support frame (8) connected to the vehicle body for rotation about a vertical axis (A) substantially contained in the longitudinal median plane of the vehicle by means of a plurality of connecting members (10) each comprising a first element (12) fixed to the body and a second element (14) fixed to the suspension support frame (8) and mounted for sliding on the first element (12) in a direction tangential to a circle centred on the vertical axis (A), characterised in that it includes a mechanical steering device according to Claim 1, in which the steering tie-rods (42) are connected to respective second elements (14) of a pair of connecting members (10).

## Patentansprüche

1. Mechanische Vorrichtung zur Lenkung der Hinterräder eines Kraftfahrzeugs mit vier lenkbaren Rädern, umfassend:
- eine hintere Lenkeinheit (4), die einen drehbaren Nocken (18) enthält, wobei entgegengesetzte Seiten desselben von zwei Folgern (32) in Eingriff genommen sind, die betriebsmäßig mit einem Mechanismus zur Bewirkung der Lenkung der Hinterräder verbunden sind, und
- Übertragungsmittel zur Drehung des Nockens (18) um seine Achse (C) in Abhängigkeit von der Lenkung der Vorderräder,
**dadurch gekennzeichnet**,
daß die Folger (32) von einem drehbaren Betätigungsglied (34) gehalten sind, an dem ein Paar Lenkverbindungsstangen (42) angelenkt ist, die einen Teil des Mechanismus zur Bewirkung der Lenkung der Hinterräder bilden.

2. Vorrichtung nach Anspruch 1, dadurch gekennzeichnet, daß der Nocken (18) und das Betätigungsglied (34) zur Drehung um parallele Achsen (C, D) gehalten sind.

3. Vorrichtung nach Anspruch 1, dadurch gekennzeichnet, daß die Lenkverbindungsstangen (42) mittels jeweiliger Kugelgelenke (44) an dem Betätigungsglied (34) angelenkt sind.

4. Vorrichtung nach Anspruch 1, dadurch gekennzeichnet, daß der Nocken (18) von einer Platte mit aktiven seitlichen Profilen (20, 22) gebildet ist, die die Gesetzmäßigkeit festlegen, welche die Lenkung der Hinterrader bestimmt.

5. Vorrichtung nach Anspruch 4, dadurch gekennzeichnet, daß die Folger (32) ein Paar Rollen umfassen, die von dem Betätigungsglied (34) zur Drehung um jeweilige Achsen gehalten sind, welche im wesentlichen parallel zu der Drehachse (C) des Nockens (18) verlaufen.

6. Vorrichtung nach Anspruch 1, dadurch gekennzeichnet, daß die Übertragungsmittel eine longitudinale Welle (6) umfassen, die vermittels eines Kegelradgetriebes (26, 28) mit dem Nocken (18) verbunden ist.

7. Vorrichtung nach Anspruch 5, dadurch gekennzeichnet, daß das Betätigungsglied (34) einen ersten Arm (36), der durch einen allgemein U-förmigen Bügel mit gabelförmigen Enden (40) gebildet ist, welche die Rollen (32) aufnehmen, und einen zweiten bogenförmigen Arm (38) aufweist, der die Enden (40) des Bügels (36) miteinander verbindet.

8. Kraftfahrzeug mit vier lenkbaren Rädern, enthaltend einen Hinterradaufhängungsstützrahmen (8), der zur Drehung um eine vertikale, im wesentlichen in der Längsmittenebene des Fahrzeugs liegenden Achse (A) mittels einer Vielzahl von Verbindungsgliedern (10) mit der Fahrzeugkarosserie verbunden ist, deren jedes ein an der Karosserie befestigtes erstes Element (12) und ein zweites Element (14) umfaßt, das an dem Radaufhängungsstützrahmen (8) befestigt und zur Verschiebung an dem ersten Element (12) in einer Richtung tangential zu einem auf der vertikalen Achse (A) zentrierten Kreis gehalten ist,
**dadurch gekennzeichnet,**
daß es eine mechanische Lenkvorrichtung gemäß Anspruch 1 enthält, bei der die Lenkverbindungsstangen (42) mit jeweiligen zweiten Elementen (14) von einem Paar Verbindungsglieder (10) verbunden sind.

## Revendications

1. Dispositif mécanique de direction des roues arrière d'un véhicule à quatre roues directrices, comprenant:
- une unité de direction arrière (4) qui comprend une came rotative (18) dont les côtés opposés sont engagés par deux suiveurs de came (32) fonctionnellement associés à un mécanisme pour effectuer la direction des roues arrière, et
- des moyens de transmission destinés à faire tourner la came 18 autour de son axe (C) en fonction de la direction des roues avant,
caractérisé en ce que les suiveurs de came (32) sont portés par un élément fonctionnel rotatif (34) sur lequel sont articulés une paire de tirants de direction (42) qui font partie du mécanisme pour assurer la direction des roues arrière.

2. Dispositif selon la revendication 1, caractérisé en ce que la came (18) et l'élément fonctionnel (34) sont montés en rotation autour d'axes parallèles (C, D).

3. Dispositif selon la revendication 1, caractérisé en ce que les tirants de direction (42) sont articulés sur l'élément fonctionnel (34) au moyen d'articulations à rotules respectives (44).

4. Dispositif selon la revendication 1, caractérisé en ce que la came (18) est constituée par une plaque avec des profils latéraux actifs (20, 22) qui définissent la loi qui gouverne la direction des roues arrière.

5. Dispositif selon la revendication 4, caractérisé en ce que les suiveurs de came (32) comprennent une paire de galets supportés par l'élément fonctionnel (34) de manière à tourner autour d'axes respectifs sensiblement parallèles à l'axe de rotation C de la came (18).

6. Dispositif selon la revendication 1, caractérisé en ce que les moyens de transmission comprennent une barre longitudinale (6) reliée à la came (18) au moyen d'un pignon conique (26, 28).

7. Dispositif selon la revendication 5, caractérisé en ce que l'élément fonctionnel (34) comprend un premier bras (36) constitué par un étrier généralement en forme de U avec des extrémités (40) en forme de fourche qui logent les galets (32), et un second bras incurvé (38) qui relie les extrémités (40) de l'étrier (36).

8. Véhicule à moteur à quatre roues directrices, comprenant un cadre de support (8) pour la suspension arrière, raccordé au corps du véhicule de manière à tourner autour d'un axe vertical (A) sensiblement contenu dans le plan longitudinal médian du véhicule au moyen d'une pluralité d'éléments de connexion (10) qui comprennent chacun un premier élément (12) fixé au corps et un second élément (14) fixé au cadre de support (8) de la suspension, et monté de manière à coulisser sur le premier élément (12) dans une direction tangentielle à un cercle centré sur l'axe vertical (A), caractérisé en ce qu'il comprend un dispositif mécanique de direction selon la revendication 1, dans lequel les tirants de direction (42) sont raccordés aux seconds éléments respectifs (14) d'une paire d'éléments de connexion (10).
